# EUROPEAN PATENT APPLICATION

(11) **EP 4 607 017 A1**
(43) Date of publication of application: **27.08.2025**
(21) Application number: 25152385.8
(22) Date of filing: 16.01.2025
(51) Int. Cl.: F02D 41/00, F02M 26/06, F02M 26/15, F02D 41/38, F02D 41/40

(54) **ENGINE SYSTEM**

(30) Priority: 21.02.2024 JP 2024024453
(71) Applicant: MAZDA MOTOR CORPORATION, Hiroshima 730-8670 (JP)
(72) Inventor: Matsuo, Takeru, Fuchu-cho, Aki-gun, 730-8670 (JP); Minamoto, Hiroshi, Fuchu-cho, Aki-gun, 730-8670 (JP); Miyazaki, Masahiro, Fuchu-cho, Aki-gun, 730-8670 (JP); Nakano, Yohei, Fuchu-cho, Aki-gun, 730-8670 (JP); Wada, Tomoyuki, Fuchu-cho, Aki-gun, 730-8670 (JP); Yoshida, Sotaro, Fuchu-cho, Aki-gun, 730-8670 (JP); Takaki, Kentaro, Fuchu-cho, Aki-gun, 730-8670 (JP)
(74) Representative: Müller-Boré & Partner Patentanwälte PartG mbB

(57) **Abstract**

An adjustment apparatus (9) which adjusts an engine output or engine torque and an EGR passage (51) which connects an exhaust passage (40) on a downstream side relative to exhaust gas purification apparatuses (42 and 43) with an intake passage (30) and returns EGR gas as a part of exhaust gas to the intake passage are provided, restriction control is carried out which is for controlling the adjustment apparatus such that an upper limit value of the engine output or the engine torque is set lower than a maximum value and the engine output or the engine torque has a value equal to or lower than the upper limit value in a case where a purification apparatus temperature is lower than a predetermined reference temperature, and the upper limit value is set to a lower value when the outside air temperature is low than a value when that is high.

## Description

### [Technical Field]

The present invention relates to an engine system and a method of controlling an engine system.

### [Background Art]

In related art, as for engines or the like installed in vehicles, discussions have been held about reduction in a discharge amount of harmful substances, in other words, an improvement in exhaust performance. For example, Patent Literature 1 discloses an engine including a catalyst apparatus, the engine reducing an intake air amount in order to reduce a discharge amount of a harmful substance when a temperature of a catalyst apparatus is low and a purification capability for exhaust gas by the catalyst apparatus is low.

### [Citation List]

### [Patent Literature]

[Patent Literature 1] Japanese Patent No. 3000804

### [Summary]

### [Problems to be Solved by the Invention]

As described above, because when an intake air amount is decreased, combustion gas generated in an engine body and thus an amount of exhaust gas can be suppressed to a small amount, a discharge amount of a harmful substance can be decreased.

However, in an engine which has an EGR passage and in which a part of exhaust gas is returned to an intake passage, it is difficult to obtain sufficient exhaust performance in a case where an outside air temperature is low only by carrying out control for simply decreasing the intake air amount when a temperature of a catalyst apparatus is low. Specifically, when the outside air temperature is low, water in the exhaust gas might be frozen in the EGR passage. When freezing occurs in the EGR passage, a return amount of the exhaust gas, which is returned to the intake passage through the EGR passage, becomes insufficient, and as a result, the exhaust performance is likely to be degraded. As noted above, the engine of above Patent Literature 1 has a problem that even under a condition where the temperature of the catalyst apparatus is similarly low, the exhaust performance is more likely to be degraded when the outside air temperature is low than when the outside air temperature is high, and there is room for improvement in this point.

The present invention has been made in consideration of the above-described circumstance, and an object thereof is to achieve proper exhaust performance.

### [Means for Solving the Problems]

The above-described problem is solved by the invention as defined in independent claims. Particularly, an engine system includes: an engine body; an intake passage through which intake air introduced into the engine body flows; an exhaust passage through which exhaust gas guided out from the engine body flows; an adjustment apparatus which adjusts an engine output or engine torque; an exhaust gas purification apparatus which is disposed in the exhaust passage and purifies exhaust gas; an EGR passage which connects the exhaust passage on a downstream side relative to the exhaust gas purification apparatus with the intake passage and returns EGR gas as a part of exhaust gas to the intake passage; an EGR valve which opens and/or closes the EGR passage; an outside air temperature acquisition apparatus which acquires an outside air temperature; a purification apparatus temperature acquisition apparatus which acquires a purification apparatus temperature as a temperature of the exhaust gas purification apparatus; and a control apparatus which controls the adjustment apparatus and the EGR valve. The control apparatus carries out restriction control for controlling the adjustment apparatus such that an upper limit value of the engine output or the engine torque is set lower than a maximum value and the engine output or the engine torque has a value equal to or lower than the upper limit value in a case where the purification apparatus temperature acquired by the purification apparatus temperature acquisition apparatus is lower than a predetermined reference temperature. Particularly, the control apparatus sets the upper limit value to a lower value when the outside air temperature acquired by the outside air temperature acquisition apparatus is low than a value when the outside air temperature is high. In other words, the control apparatus sets the upper limit value lower as the outside air temperature becomes lower.

In the present invention, in a case where the temperature of the exhaust gas purification apparatus is lower than the predetermined reference temperature, the engine output or the engine torque is suppressed to the upper limit value or lower, which is lower than the maximum value. Thus, a situation can be prevented where a large amount of exhaust gas is generated in a state where a purification capability of the exhaust gas purification apparatus is low, and proper exhaust performance can be achieved.

Here, because a temperature of the exhaust gas flowing into the EGR passage is comparatively low in a configuration in which the EGR passage is connected with the downstream side relative to the exhaust gas purification apparatus, when the outside air temperature is low, water in the exhaust gas might be frozen in the EGR passage. When freezing occurs in the EGR passage, sufficient exhaust gas, in other words, inactive gas cannot be returned to the intake passage via the EGR passage, and degradation of exhaust performance such as an increase in a discharge amount of NOx from the engine body is likely to occur. As noted above, even under the same condition where the temperature of the exhaust gas purification apparatus is lower than the reference temperature, the exhaust performance is more likely to be degraded when the outside air temperature is lower. To deal with this, in the present invention, when the restriction control is carried out in which the engine output or the engine torque is set to have the upper limit value or lower. Particularly, the above upper limit value is set to a lower value when the outside air temperature is low than a value when that is high. In other words, the above upper limit value is set to a lower value as the outside air temperature becomes lower. Thus, while excessive lowering of the engine output or the engine torque is avoided by setting the above upper limit value to a higher value when the outside air temperature is high, discharge amounts of the generated exhaust gas and a harmful substance such as NOx included in that can be suppressed to small amounts when the outside air temperature is low, and proper exhaust performance can be achieved.

The control apparatus may prohibit opening of the EGR valve when the outside air temperature is lower than a predetermined determination temperature.

In this configuration, opening of the EGR valve is prohibited when the outside air temperature is lower than the determination temperature, and a flow of the exhaust gas in the EGR passage is stopped. Thus, water contained in the exhaust gas can be prevented from being frozen in the EGR passage.

However, when the flow of the exhaust gas in the EGR passage and thus return of the exhaust gas to the intake passage via the EGR passage are stopped, a discharge amount of NOx from the engine body might become excessively large. To deal with this, as described above, because the above upper limit value is set to be a low value when the outside air temperature is low (i.e., the upper limit value is set to be lower as the outside air temperature becomes lower) such as when the outside air temperature is lower than the determination temperature, an amount of the exhaust gas can be suppressed to a small amount. Thus, an increase in a NOx discharge amount can be suppressed.

In the above configuration, the engine system may further include: a high-pressure EGR passage which connects the exhaust passage on an upstream side relative to the exhaust gas purification apparatus with the intake passage; and a high-pressure EGR valve which opens and/or closes the high-pressure EGR passage. Particularly, when the restriction control is carried out, the control apparatus sets the upper limit value to a lower value (or a first value) when the outside air temperature is lower than a predetermined determination temperature than a value (or a second value, wherein the first value is lower than the second value) when the outside air temperature is equal to or higher than the determination temperature, permits opening of the EGR valve and the high-pressure EGR valve when the outside air temperature is equal to or higher than the determination temperature, and permits opening of the high-pressure EGR valve but prohibits opening of the EGR valve when the outside air temperature is lower than the determination temperature.

In this configuration, opening of the EGR valve is prohibited when the outside air temperature is lower than the determination temperature, and water contained in the exhaust gas can thereby be prevented from being frozen in the EGR passage. Further, in this configuration, in a circumstance where opening of the EGR valve is prohibited because the outside air temperature is lower than the determination temperature, the above upper limit value is set to a low value, and return of the exhaust gas to the intake passage via the high-pressure EGR passage is permitted. Thus, an increase in the NOx discharge amount which is likely to occur due to prohibition of opening of the EGR valve can be suppressed by reduction in the discharge amount of the exhaust gas and by introduction of the exhaust gas via the high-pressure EGR passage.

The control apparatus may set a target EGR amount as a target value of an exhaust gas amount to be returned to the intake passage, and set a high-pressure EGR gas upper limit amount as an upper limit value of a high-pressure EGR gas amount to be returned to the intake passage via the high-pressure EGR passage. Particularly, the control apparatus may control the high-pressure EGR valve such that the high-pressure EGR gas amount has a value equal to or lower than the upper limit value. Further particularly, the control apparatus may control the high-pressure EGR valve such that the high-pressure EGR gas amount is equal to or lower than the high-pressure EGR gas upper limit amount.

In carrying out the restriction control, the control apparatus may set the upper limit value to the same value as a value in a case where the outside air temperature is equal to or higher than the determination temperature (i.e., the upper limit value may be set to the second value) when the outside air temperature is lower than the determination temperature and the target EGR amount is equal to or smaller than the high-pressure EGR gas upper limit amount. Further particularly, the control apparatus may set the upper limit value to a lower value than a value in a case where the outside air temperature is equal to or higher than the determination temperature (i.e., the upper limit value may be set to be lower than the second value) when the outside air temperature is lower than the determination temperature and the target EGR amount is greater than the high-pressure EGR gas upper limit amount.

In this configuration, in a case where the target EGR amount is realizable by return of the exhaust gas to the intake passage via the high-pressure EGR passage even when the outside air temperature is lower than the determination temperature, the above upper limit value is set to the same comparatively high value as the value in a case where the outside air temperature is equal to or higher than the determination temperature. Thus, while the discharge amount of NOx can be suppressed to a small amount by realization of the target EGR amount, the engine output or the engine torque can be secured. Meanwhile, in a case where the outside air temperature is lower than the determination temperature and the target EGR amount is not realizable, the above upper limit value is set to a low value, and the discharge amount of the exhaust gas is reduced. Thus, in this case also, the NOx discharge amount can be prevented from becoming excessively large.

The engine system may include an exhaust gas temperature detection apparatus which detects a temperature of exhaust gas, and the control apparatus may set the high-pressure EGR gas upper limit amount to have a lower value as the temperature of the exhaust gas, which is detected by the exhaust gas temperature detection apparatus, becomes higher.

In this configuration, a situation is prevented where a large amount of the exhaust gas passes through the high-pressure EGR passage in a state where the temperature of the exhaust gas is high. Thus, heat damage from the exhaust gas to peripheral components of the high-pressure EGR passage can be suppressed. Further, when heat damage is less likely to be caused to the peripheral components because the temperature of the exhaust gas is low, a return amount of the exhaust gas to the intake passage is secured, and the discharge amount of NOx can thereby certainly be reduced.

The control apparatus may set the upper limit value such that the upper limit value becomes lower as the purification apparatus temperature becomes lower when the outside air temperature is lower than the determination temperature and the target EGR amount is greater than the high-pressure EGR gas upper limit amount. The control apparatus may set the upper limit value such that the upper limit value becomes lower as a deficiency amount of the high-pressure EGR gas upper limit amount with respect to the target EGR amount becomes greater.

In this configuration, when the outside air temperature is lower than the determination temperature, the upper limit value can be set to an appropriate value which corresponds to the outside air temperature and the purification apparatus temperature.

### [Effect of Invention]

As described above, an engine system of the present invention can enhance exhaust performance.

### [Brief Description of Drawings]

FIG. 1 is an outline configuration diagram illustrating a preferable embodiment of an engine system of the present invention.
FIG. 2 is a function block diagram illustrating a control system of an engine.
FIG. 3 is a flowchart illustrating procedures of control to be carried out by a controller.
FIG. 4 is a map illustrating a control region of an EGR apparatus included in the engine.
FIG. 5 is a map for explaining a prohibition region of LP-EGR.
FIG. 6 is a graph illustrating a relationship between an engine water temperature and a determination temperature.
FIG. 7 is a graph illustrating a relationship among an engine speed, an SCR catalyst temperature, and normal upper limit torque.
FIG. 8 is a graph illustrating a relationship between an exhaust gas temperature and an HP-EGR upper limit amount.
FIG. 9 is a graph illustrating a relationship between an EGR deficiency amount and a reduction amount of upper limit torque.
FIG. 10 is a graph illustrating the normal upper limit torque and low-temperature upper limit torque while comparing those.
FIG. 11 shows relationships between an upper limit torque and a SCR catalyst temperature, an engine water temperature, and an outside air temperature.

### [Embodiment for Carrying Out the Invention]

### (General Configuration of Engine)

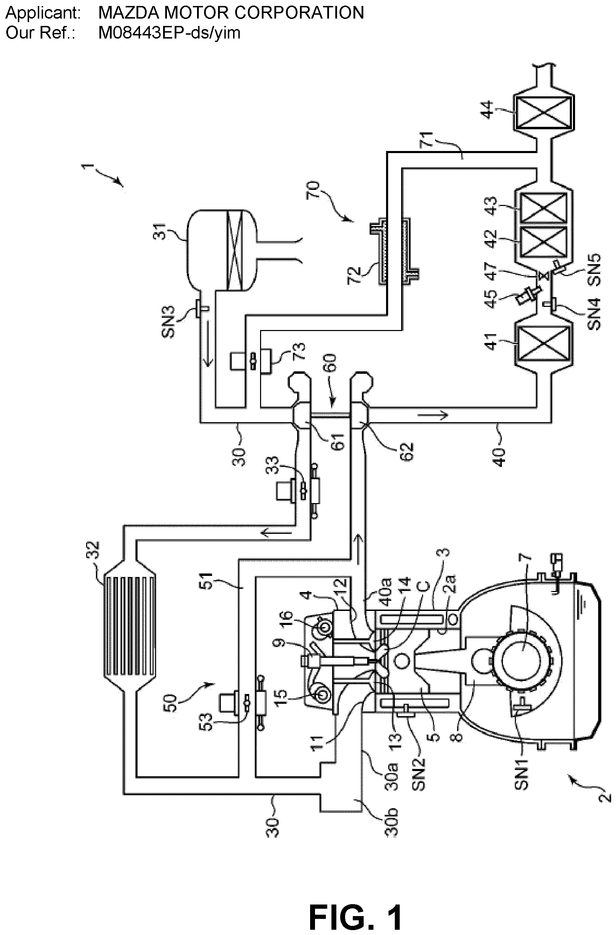

FIG. 1 is an outline configuration diagram illustrating a preferable embodiment of an engine system of the present invention. An engine included in an engine system 1 illustrated in FIG. 1 may be a four-cycle engine, e.g., a four-cycle diesel engine, which is installed in a vehicle as a motive power source for travel.

The engine includes an engine body 2, an intake passage 30 through which intake air introduced into the engine body 2 flows, and an exhaust passage 40 through which exhaust gas exhausted from the engine body 2 flows. The engine further includes at least one of an HP-EGR apparatus 50 and an LP-EGR apparatus 70 which return a part of the exhaust gas flowing through the exhaust passage 40 to the intake passage 30. The engine may further include an exhaust turbocharging apparatus 60 which supercharges the intake air flowing through the intake passage 30.

The engine body 2 has one or a plurality of cylinders 2a which are aligned in a direction orthogonal to the page of FIG. 1 (only one cylinder is illustrated in FIG. 1). The engine body 2 may include a cylinder block 3, a cylinder head 4, and one or a plurality of pistons 5. Each of the cylinders 2a is formed with the cylinder block 3 and the cylinder head 4. That is, a plurality of cylindrical spaces which correspond to the plurality of cylinders 2a are formed in an internal portion of the cylinder block 3, and the cylinder head 4 is mounted on an upper surface of the cylinder block 3 so as to block the cylindrical spaces from an upper area. The piston 5 is housed in each of the cylinders 2a to be capable of reciprocatively sliding.

A combustion chamber C is formed above the piston 5 of each of the cylinders 2a. Each of the combustion chambers C may be a space which is demarcated by a lower surface of the cylinder head 4, a side peripheral surface (cylinder liner) of the cylinder 2a, and a crown surface of the piston 5. The combustion chamber C receives supply of fuel injected from an injector 9 which will be described later. The piston 5 receives combustion energy of the fuel supplied to the combustion chamber C and thereby performs reciprocating motion in an up-down direction.

A crankshaft 7 as an output shaft of the engine body 2 may be provided below the piston 5 and in a lower portion of the cylinder block 3. The crankshaft 7 is coupled with the piston 5 of each of the cylinders 2a via a connecting rod 8 and rotates around a center axis in response to the reciprocating motion (up-down motion) of the piston 5.

A crank angle sensor SN1 and a water temperature sensor SN2 may be mounted on the cylinder block 3. The crank angle sensor SN1 detects a crank angle as a rotation angle of the crankshaft 7 and an engine speed as a rotational speed of the crankshaft 7. The water temperature sensor SN2 detects a temperature of cooling water which flows through internal portions of the cylinder block 3 and the cylinder head 4, in other words, an engine water temperature.

Fuel injectors 9 may be mounted on the cylinder head 4. The fuel injector 9 supplies fuel to the combustion chamber C of each of the cylinders 2a. The fuel injector 9 may be mounted on the cylinder head 4 such that a distal end portion of the fuel injector 9 is exposed in the combustion chamber C.

One or a plurality of injection holes as outlets of fuel are formed in the distal end portion of the fuel injector 9. The fuel injected from each of the injection holes may be combusted by self-ignition in the combustion chamber C which is at a high temperature and a high pressure due to a compression action of the piston 5.

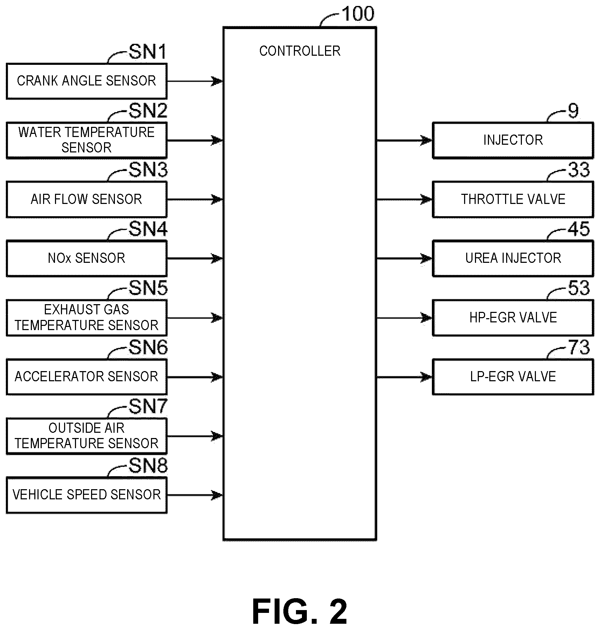

In the engine according to the present embodiment, engine torque is changed mainly in accordance with an amount of fuel to be injected from the fuel injectors 9. As noted above, in the present embodiment, the fuel injector 9 corresponds to an "adjustment apparatus" of the present invention. Note that in the following description and in FIG. 2 which will be described later, the fuel injector 9 will simply be denoted as an injector 9.

Particularly, in the cylinder head 4, intake ports 11 and exhaust ports 12 are formed. The intake port 11 is a port which connects the combustion chamber C of each of the cylinders 2a with the intake passage 30. The exhaust port 12 is a port which connects the combustion chamber C of each of the cylinders 2a with the exhaust passage 40. An intake valve 13 may be provided in the intake port 11 of each of the cylinders 2a, and an exhaust valve 14 may be provided in the exhaust port 12 of each of the cylinders 2a.

For example, the cylinder head 4 is equipped with an intake valve operating mechanism 15 and an exhaust valve operating mechanism 16. The intake valve operating mechanism 15 drives the intake valve 13 of each of the cylinders 2a to open and close in conjunction with rotations of the crankshaft 7. The exhaust valve operating mechanism 16 drives the exhaust valve 14 of each of the cylinders 2a to open and close in conjunction with rotations of the crankshaft 7.

The intake valve 13 periodically opens and/or closes an opening of the intake port 11 on the combustion chamber C side in response to driving of the intake valve operating mechanism 15. The exhaust valve 14 periodically opens and/or closes an opening of the exhaust port 12 on the combustion chamber C side in response to driving of the exhaust valve operating mechanism 16.

The intake passage 30 is a passage for introducing intake air into the combustion chamber C of each of the cylinders 2a. The intake passage 30 may have a surge tank 34 in a portion, on a downstream side, which is close to the engine body 2. The surge tank 34 is a tank which provides an expansion space for equalizing an introduction amount of intake air into each of the cylinders 2a.

In a portion in the intake passage 30 on an upstream side relative to the surge tank 34, an air cleaner 31, a throttle valve 33, and/or an intercooler 32 may be sequentially provided. The air cleaner 31 is a filter for removing foreign substances in the intake air. The intercooler 32 is a heat exchanger which cools the intake air compressed by the exhaust turbocharging apparatus 60. The throttle valve 33 is a valve for adjusting a flow amount of the intake air.

An air flow sensor SN3 may be mounted on the intake passage 30. The air flow sensor SN3 is a sensor which detects the flow amount of the intake air, which is introduced into the engine body 2, and is arranged in a portion in the intake passage 30 on the downstream side relative to the air cleaner 31.

The exhaust passage 40 is a passage for discharging the exhaust gas exhausted from the combustion chamber C of each of the cylinders 2a to an outside. The exhaust passage 40 is provided with one or a plurality of catalysts 41 to 44 for purifying various harmful components contained in the exhaust gas.

For example, an oxidation catalyst apparatus 41, an SCRF (Selective Catalytic Reduction Filter) 42, an SCR (Selective Catalytic Reduction) catalyst apparatus 43, and a slip catalyst apparatus 44 are provided in this order from the upstream side (the side close to the engine body 2) of the exhaust passage 40. Further, a urea injector 45 and/or a mixing plate 47 may be provided in a portion between the oxidation catalyst apparatus 41 and the SCRF 42 in the exhaust passage 40.

The oxidation catalyst apparatus 41 has a catalyst for oxidizing and detoxifying CO and HC in the exhaust gas (for converting those into CO₂ and H₂O). The oxidation catalyst apparatus 41 has a porous carrier and a catalyst substance such as platinum or palladium, which is carried by the carrier, for example.

The urea injector 45 is an injection valve which injects urea water made by dissolving high-purity urea into pure water. The urea injector 45 injects the urea water, which is supplied from a urea water tank (not illustrated) installed in the vehicle, into an internal portion of the exhaust passage 40. Urea contained in the injected urea water is converted into ammonia (NH₃) by hydrolysis at a high temperature and is adsorbed on one or more SCR catalysts included in the SCRF 42 and the SCR catalyst apparatus 43 on the downstream side.

The mixing plate 47 is a plate-shaped member for stirring a flow of the exhaust gas. The mixing plate 47 serves to uniformly disperse urea contained in the urea water injected from the urea injector 45 and to send that to the downstream side (the SCRF 42 and the SCR catalyst apparatus 43).

The SCRF 42 is a filter with an SCR catalyst. The SCRF 42 is an apparatus in which a catalyst substance such as platinum for combusting soot and the SCR catalyst are carried by a filter capable of collecting the soot in the exhaust gas.

As described above, the SCRF 42 adsorbs ammonia which is generated from the urea water injected by the urea injector 45. The SCR catalyst included in the SCRF 42 is a selective reduction type NOx catalyst and reduces and detoxifies NOx in the exhaust gas (converts that into N₂ and H₂O) by a chemical reaction using ammonia as a reducing agent. As the SCR catalyst, for example, vanadium, tungsten, zeolite or the like is used.

For example, the SCR catalyst apparatus 43 is an apparatus including the SCR catalyst and has a porous carrier and the SCR catalyst such as vanadium, tungsten, or zeolite which is carried by the carrier, for example. The SCR catalyst apparatus 43 reduces NOx which is not reduced by the SCRF 42. A casing may be shared by the SCRF 42 and the SCR catalyst apparatus 43, and the SCR catalyst apparatus 43 is provided on an immediate downstream position of the SCRF 42. The above SCRF 42 and SCR catalyst apparatus 43 correspond to "exhaust gas purification apparatuses" of the present invention.

The slip catalyst apparatus 44 is an apparatus which has an oxidation catalyst for oxidizing ammonia slipping from the SCRF 42 and the SCR catalyst apparatus 43 (in other words, the ammonia flowing out to the downstream side without being used for reduction of NOx). As the slip catalyst apparatus 44, for example, an apparatus having a similar structure to the oxidation catalyst apparatus 41 can be used.

In a portion between the oxidation catalyst apparatus 41 and the urea injector 45 in the exhaust passage 40, a NOx sensor SN4 may be provided which detects a concentration of NOx in the exhaust gas. Further, in an immediate upstream portion of the SCRF 42 (a portion between the mixing plate 47 and the SCRF 42), an exhaust gas temperature sensor SN5 may be provided which detects a temperature of the exhaust gas. The exhaust gas temperature sensor SN5 corresponds to an "exhaust gas temperature detection apparatus".

The exhaust turbocharging apparatus 60 is a supercharging apparatus which uses the exhaust gas exhausted from the combustion chamber C and thereby supercharges air to be supplied to the above combustion chamber C. For example, the exhaust turbocharging apparatus 60 includes a compressor 61 which is arranged in the intake passage 30 and a turbine 62 which is coaxially coupled with the compressor 61 and is arranged in the exhaust passage 40. The compressor 61 is arranged in a portion between the air cleaner 31 and the intercooler 32 in the intake passage 30. The turbine 62 is arranged in a portion in the exhaust passage 40 on the upstream side relative to the oxidation catalyst apparatus 41.

The exhaust gas exhausted from the engine body 2 is introduced into the turbine 62, and the turbine 62 is rotated and driven by the exhaust gas. The compressor 61 rotates in conjunction with the turbine 62 and pressure-feeds the intake air to the downstream side. In other words, supercharging for sending the intake air in the intake passage 30 to the engine body 2 while compressing the intake air is realized by the exhaust turbocharging apparatus 60.

The HP-EGR (High Pressure-EGR) apparatus 50 includes an HP-EGR passage 51 and an HP-EGR valve 53. The HP-EGR passage 51 is a passage for returning the exhaust gas from the exhaust passage 40 to the intake passage 30. For example, the HP-EGR passage 51 connects a portion in the exhaust passage 40 on the upstream side relative to the turbine 62 with a portion between the throttle valve 33 and the compressor 61 in the intake passage 30. The HP-EGR valve 53 is a valve which adjusts a return amount of HP-EGR gas as the exhaust gas which is returned to the intake passage 30 through the HP-EGR passage 51.

The LP-EGR (Low Pressure-EGR) apparatus 70 may include an LP-EGR passage 71, an EGR cooler 72, and an LP-EGR valve 73. The LP-EGR passage 71 is a passage for returning the exhaust gas, which passes through the SCR catalyst apparatus 43, to the intake passage 30. For example, the LP-EGR passage 71 connects a portion between the SCR catalyst apparatus 43 and the slip catalyst apparatus 44 in the exhaust passage 40 with a portion in the intake passage 30 on the upstream side relative to the compressor 61. The EGR cooler 72 cools LP-EGR gas as the exhaust gas which is returned to the intake passage 30 through the LP-EGR passage 71. The LP-EGR valve 73 is a valve which adjusts a return amount of LP-EGR gas.

In the following, the exhaust gas which is returned to the intake passage 30 by the HP-EGR apparatus 50 and the LP-EGR apparatus 70 will be referred to as EGR gas. In other words, the HP-EGR gas and the LP-EGR gas will collectively be referred to as EGR gas.

Further, returning the exhaust gas by using the LP-EGR apparatus 70 will appropriately be referred to as LP-EGR, and returning the exhaust gas by using the HP-EGR apparatus 50 will appropriately be referred to as HP-EGR.

Note that the LP-EGR passage 71 may correspond to an "EGR passage" of the present invention, and the LP-EGR valve 73 may correspond to an "EGR valve" of the present invention. Further, the HP-EGR passage 51 may corresponds to a "high-pressure EGR passage", and the HP-EGR valve 53 may corresponds to a "high-pressure EGR valve". Further, an amount of the HP-EGR gas corresponds to a "high-pressure EGR gas amount".

### (Control System)

FIG. 2 is a function block diagram illustrating a control system of the engine of the present embodiment. The engine system 1 has a controller 100. The controller 100 may be an apparatus for integrally controlling the engine and is configured with a microcomputer including known CPU (processor), ROM, RAM, and so forth. The controller 100 corresponds to a "control apparatus" of the present invention.

Detection information by one or various sensors is input to the controller 100. For example, the controller 100 is electrically connected with the above-described crank angle sensor SN1, water temperature sensor SN2, air flow sensor SN3, NOx sensor SN4, and/or exhaust gas temperature sensor SN5, and various information detected by those sensors, for example, information such as the crank angle, the engine speed, the engine water temperature, an intake air flow amount, and the temperature of the exhaust gas is each and successively input to the controller 100.

Further, the vehicle may be provided with an accelerator sensor SN6 which detects an opening (hereinafter referred to as an accelerator opening) of an accelerator pedal which is operated by a driver driving the vehicle, an outside air temperature sensor SN7 which detects an outside air temperature, and/or a vehicle speed sensor SN8 which detects a vehicle speed. Detection information by those accelerator sensor SN6, outside air temperature sensor SN7, and/or vehicle speed sensor SN8 may be successively input to the controller 100. The outside air temperature sensor SN7 is an apparatus which acquires the outside air temperature by detection and corresponds to an "outside air temperature acquisition apparatus" of the present invention.

The controller 100 controls each unit of the engine while executing various kinds of determinations, computation, and so forth based on input information from each of the above sensors (SN1 to SN8). For example, the controller 100 is electrically connected with the injectors 9, the throttle valve 33, the urea injector 45, the HP-EGR valve 53, the LP-EGR valve 73, and so forth and respectively outputs signals for control to those devices based on results or the like of the above computation.

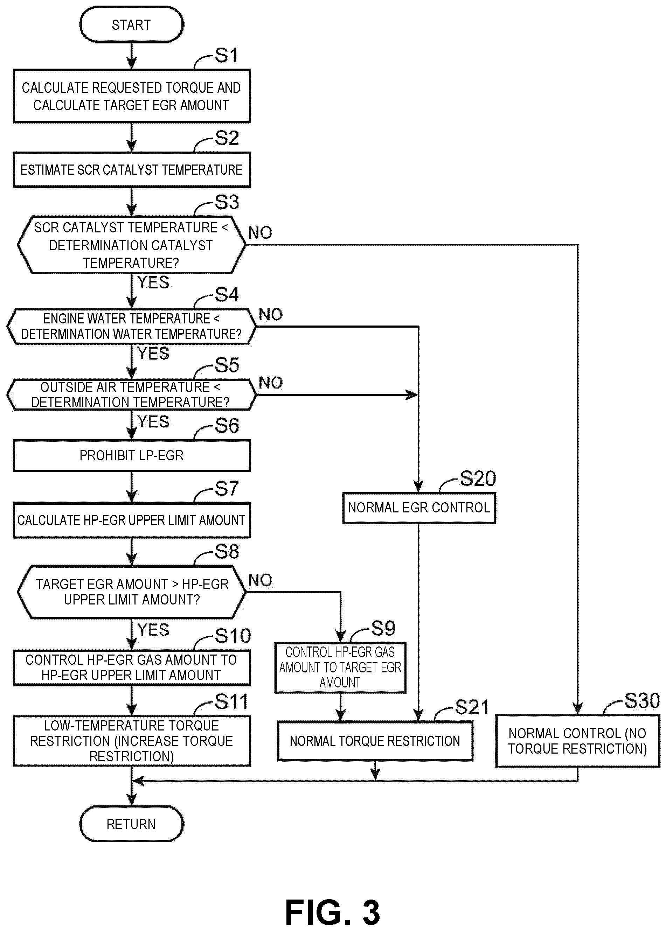

Control to be carried out by the controller 100 will be described by using a flowchart in FIG. 3. Note that the flowchart illustrated in FIG. 3 may be repeatedly carried out every predetermined computation cycle while the engine is driven.

First, the controller 100 may calculate an engine load, in other words, requested torque as engine torque which is requested by the driver of the vehicle (step S1). The controller 100 may calculate the requested torque based on the vehicle speed detected by the vehicle speed sensor SN8, the accelerator opening detected by the accelerator sensor SN6, and so forth. The requested torque is set to have a value equal to or lower than a maximum value of the engine torque that is a maximum value of torque realizable by the engine body. Note that the maximum value of the engine torque may be set in advance based on a maximum combustion pressure, an air amount, and so forth.

Further, the controller 100 may calculate a target value of an amount of the EGR gas to be introduced into the cylinder 2a, in other words, a target EGR amount as a target value of an exhaust gas amount to be returned to the intake passage 30 (step S1). The controller 100 may set the target EGR amount based on the requested torque, which is calculated in step S2, and so forth. In the present embodiment, as the requested torque becomes higher, the target EGR amount is set to have a higher value.

Next, the controller 100 may estimate or calculate an SCR catalyst temperature as a temperature of the SCRF 42 (step S2). The SCR catalyst temperature corresponds to a "purification apparatus temperature" of the present invention.

In step S2, the controller 100 may estimate or calculate an input heat quantity to the SCRF 42 and a dissipated heat quantity from the SCRF 42 and estimate or calculate the SCR catalyst temperature based on those. For example, the controller 100 estimates or calculates a flow amount of the exhaust gas based on the intake air flow amount, which is detected by the air flow sensor SN3, or the like and calculates the input heat quantity to the SCRF 42 based on the flow amount of the exhaust gas and the temperature of the exhaust gas at immediate front of the SCRF 42, which is detected by the exhaust gas temperature sensor SN5.

Further, the controller 100 may calculate the dissipated heat quantity from the SCRF 42 based on the vehicle speed detected by the vehicle speed sensor SN8 and the outside air temperature detected by the outside air temperature sensor SN7. The controller 100 may calculate the SCR catalyst temperature based on the calculated input heat quantity and dissipated heat quantity of the SCRF 42 and a heat capacity of the SCRF 42 which is stored in advance.

For example, the SCR catalyst temperature is calculated to be a higher value as the input heat quantity becomes larger or the dissipated heat quantity becomes smaller and is calculated to be a lower value as the input heat quantity becomes smaller or the dissipated heat quantity becomes larger. Here, the dissipated heat quantity from the SCRF 42 can be dealt with as a larger quantity as the vehicle speed becomes higher. This is because as the vehicle speed becomes higher, traveling air blowing against the SCRF 42 increases and heat dissipation is promoted more. Conversely, because the dissipated heat quantity becomes smaller as the vehicle speed becomes lower, it is estimated that the SCR catalyst temperature becomes higher as the vehicle speed becomes lower. As noted above, in the present embodiment, the SCR catalyst temperature is estimated by the controller 100, and the controller 100 corresponds to a "purification apparatus temperature acquisition apparatus" of the present invention.

After step S2, the controller 100 determines whether or not the estimated SCR catalyst temperature is lower than a determination catalyst temperature (step S3). The determination catalyst temperature may be the temperature of the SCR catalyst in a case where a NOx purification rate by the SCR catalyst has a value equal to or higher than a predetermined value, in other words, the temperature of the SCRF 42.

The determination catalyst temperature may be set in advance and stored in the controller 100. The determination catalyst temperature corresponds to a "reference temperature" of the present invention.

When the determination in step S3 is NO and the SCR catalyst temperature is equal to or higher than the determination catalyst temperature, the controller 100 may carry out normal control (step S30) and finish a process (returns to step S1).

When the normal control is carried out, the controller 100 may decide or determine a fuel injection amount as an amount of fuel to be injected from the injectors 9 based on the requested torque, which is calculated in step S2, and the intake air flow amount, which is detected by the air flow sensor SN3, and control the injectors 9 in accordance with the decision. As described later, in a case where the determination in step S3 is YES, torque restriction is carried out in which the fuel injection amount is controlled such that the engine torque does not exceed an upper limit torque which has a lower value than the maximum value of the engine torque. On the other hand, when the normal control is carried out, the torque restriction is not performed, the requested torque is realized, and the fuel injection amount is controlled such that the engine torque does not exceed its maximum value.

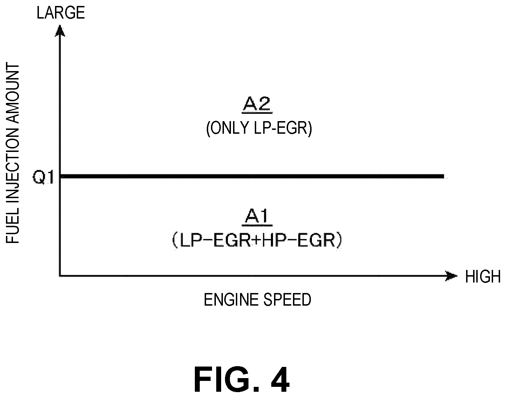

Further, when the normal control is carried out, the controller 100 may control an opening of each of the throttle valve 33, the HP-EGR valve 53, and the LP-EGR valve 73 such that the target EGR amount calculated in step S3 is realized. FIG. 4 is a map which illustrates control regions of the HP-EGR apparatus 50 and the LP-EGR apparatus 70 in a case where the normal control is carried out.

As illustrated in FIG. 4, as for control of the EGR apparatuses, an operation region of the engine may be demarcated into a low load region A1 in which the fuel injection amount is equal to or smaller than a predetermined switching injection amount Q1 and a high load region A2 in which the fuel injection amount is larger than the switching injection amount Q1. In the low load region A1, the exhaust gas is returned by both of the HP-EGR apparatus 50 and the LP-EGR apparatus 70. In other words, when the normal control is carried out, the controller 100 determines in which of the low load region A1 and the high load region A2 the engine is operated and opens both of the HP-EGR valve 53 and the LP-EGR valve 73 in a case where the engine is operated in the low load region A1.

On the other hand, in a case where the engine is operated in the high load region A2, the controller 100 closes the HP-EGR valve 53 and opens only the LP-EGR valve 73. Note that the controller 100 performs the above determination based on the fuel injection amount which is decided based on the requested torque.

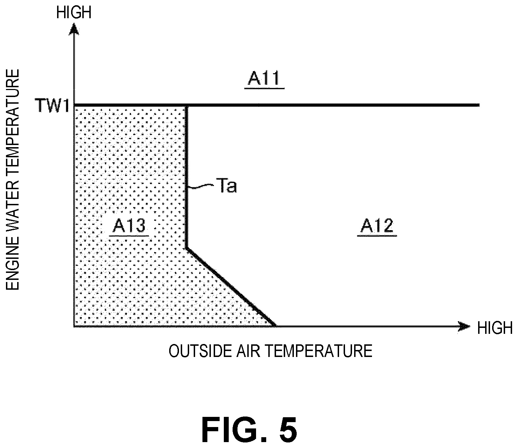

Returning to step S3, in a case where the determination in step S3 is YES and it is determined that the SCR catalyst temperature is lower than the determination catalyst temperature, the controller 100 may determine whether or not a condition for prohibiting the LP-EGR is established. FIG. 5 is a map in which the horizontal axis represents the outside air temperature and the vertical axis represents the engine water temperature.

For example in the map in FIG. 5, when a region in which the engine water temperature is equal to or higher than a predetermined determination water temperature TW1 is set as a first region A11, a region in which the engine water temperature is lower than the determination water temperature TW1 and the outside air temperature is equal to or higher than a predetermined determination temperature Ta is set as a second region A12, and a region in which the engine water temperature is lower than the determination water temperature TW1 and the outside air temperature is lower than the determination temperature Ta is set as a third region A13, in the present embodiment, the LP-EGR is prohibited when each of the engine water temperature and the outside air temperature is a temperature in the third region. The determination water temperature TW1 may be set in advance and stored in the controller 100. The determination water temperature TW1 may be set to a temperature approximately the same as the engine water temperature at a time when a warming-up operation of the engine is finished.

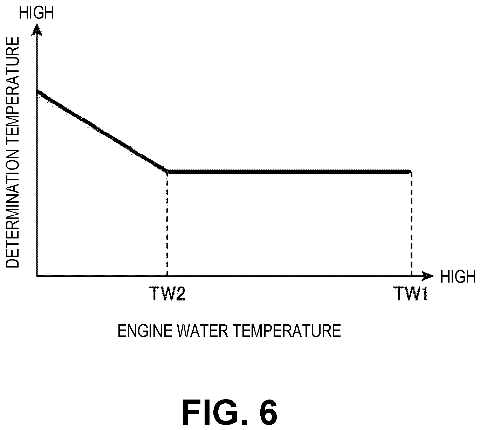

The determination temperature Ta may be set in advance and stored in the controller 100. FIG. 6 is a graph illustrating a relationship between the engine water temperature and the determination temperature Ta. As illustrated in FIG. 5 and FIG. 6, the determination temperature Ta is set such that its value becomes lower as the engine water temperature becomes higher. Details of the determination temperature will be described later.

In a case where the determination in step S3 is YES, the controller 100 may first determine whether or not the engine water temperature detected by the water temperature sensor SN2 is lower than the determination water temperature TW1, in other words, whether or not the above engine water temperature is a temperature in the first region A11 (step S4).

Particularly, in a case where the determination in step S4 is NO and the engine water temperature is equal to or higher than the determination water temperature TW1, the controller 100 does not prohibit the LP-EGR and carries out normal EGR control. In other words, the controller 100 performs similar control to that in the normal control for the HP-EGR apparatus 50 and the LP-EGR apparatus 70 (step S20). For example, as described above, the controller 100 decides which of the HP-EGR apparatus 50 and the LP-EGR apparatus 70 is used in accordance with the operation region (the low load region A1 or the high load region A2) of the engine and controls the opening of each of the throttle valve 33, the HP-EGR valve 53, and the LP-EGR valve 73 such that the target EGR amount calculated in step S3 is realized.

Further, in a case where the determination in step S4 is NO, the controller 100 carries out normal torque restriction (step S21).

When the normal torque restriction is carried out, the controller 100 may first set normal upper limit torque as an upper limit value of the engine torque. The controller 100 sets the normal upper limit torque which has a lower value than the maximum value of the engine torque based on the engine speed and the SCR catalyst temperature.

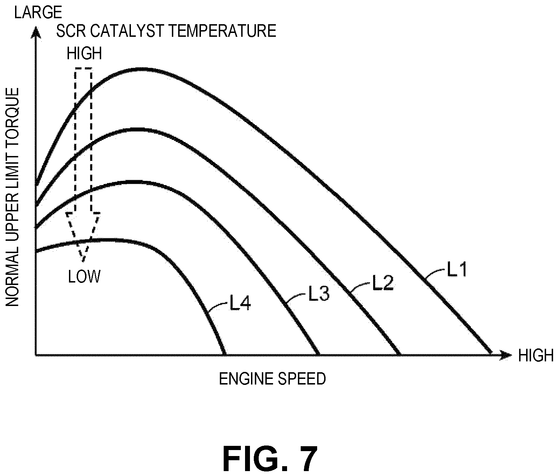

FIG. 7 is a graph schematically illustrating a relationship among the engine speed, the SCR catalyst temperature, and the normal upper limit torque. Each of lines L1 to L4 in the graph in FIG. 7 is a line which represents a relationship between the engine speed and the normal upper limit torque for each of the SCR catalyst temperatures. The SCR catalyst temperatures which correspond to four lines L1, L2, L3, and L4 are higher in this order, and the normal upper limit torque is set to have a higher value as the SCR catalyst temperature becomes higher.

Further, as it can be understood from each of the lines L1 to L4, under a condition where the SCR catalyst temperature is fixed, the normal upper limit torque may be set to have a higher value as the engine speed becomes higher when the engine speed is lower than a predetermined revolution speed and may be set to have a lower value as the engine speed becomes higher when the engine speed is equal to or higher than the above predetermined revolution speed. In the controller 100, the relationship among the engine speed, the SCR catalyst temperature, and the normal upper limit torque is stored as a map.

The controller 100 extracts, from the map, a value which corresponds to the engine speed detected by the crank angle sensor SN1 and to the SCR catalyst temperature estimated in step S2 and sets the extracted value as the normal upper limit torque. Note that as described above, the normal upper limit torque stored in the map is set to have a value lower than the maximum value of the engine torque.

When the normal torque restriction is carried out, after the normal upper limit torque is set, the controller 100 may compare the requested torque, which is calculated in step S1, with the normal upper limit torque. Then, in a case where the requested torque is equal to or smaller than the normal upper limit torque, the controller 100 decides the fuel injection amount as the amount of fuel to be injected from the injectors 9 such that the requested torque is realized and controls the injectors 9 in accordance with the decision. On the other hand, in a case where the requested torque is larger than the normal upper limit torque, the controller 100 decides the fuel injection amount as the amount of fuel to be injected from the injectors 9 such that not the requested torque but the normal upper limit torque which is lower than that is realized and controls the injectors 9 in accordance with the decision.

As noted above, in a case where the SCR catalyst temperature is lower than the determination catalyst temperature (the determination in step S3 is YES) and the engine water temperature is equal to or higher than the determination water temperature TW1 (the determination in step S4 is NO), the normal torque restriction is carried out, and the engine torque is suppressed or limited to the normal upper limit torque or smaller. After the normal torque restriction is carried out, the controller 100 may finishe the process (returns to step S1).

Returning to step S4 in FIG. 3, in a case where the determination in step S4 is YES and the engine water temperature is lower than the determination water temperature TW1, the controller 100 further determines whether or not the outside air temperature is lower than the determination temperature Ta (step S5). In other words, in step S5, the controller 100 determines whether or not each of the outside air temperature and the engine water temperature is a temperature in the third region A13.

For example, in a case where the determination in step S5 is NO and the outside air temperature is equal to or higher than the determination temperature, the controller 100 progresses to step S20, does not prohibit the LP-EGR, and carries out the normal EGR control. Further, the controller 100 thereafter progresses to step S21 and carries out the normal torque restriction.

On the other hand, in a case where the determination in step S5 is YES and the outside air temperature is lower than the determination temperature, the controller 100 may prohibit the LP-EGR. In other words, the controller 100 closes the LP-EGR valve 73 and prohibits opening of that (step S6). Note that when the LP-EGR valve 73 is already closed, the controller 100 maintains closure of the LP-EGR valve 73.

As described above, the LP-EGR passage 71 is connected with a portion in the exhaust passage 40 on the downstream side relative to the SCR catalyst apparatus 43, and the temperature of the exhaust gas which flows into the LP-EGR passage 71 is comparatively low. Thus, in a case where a flow of the exhaust gas into the LP-EGR passage 71 is permitted when the outside air temperature is low, water contained in the exhaust gas might be frozen in the LP-EGR passage 71.

In particular, in the present embodiment, the EGR cooler 72 is provided on the LP-EGR passage 71, the exhaust gas is cooled, and freezing in the LP-EGR passage 71 is thereby likely to occur. When freezing occurs in the LP-EGR passage 71, trouble might occur such as a situation where the LP-EGR valve 73 cannot appropriately be opened or closed.

Accordingly, in the present embodiment, in a case where the outside air temperature is low (lower than the determination temperature) and it is estimated that freezing occurs in the LP-EGR passage 71, the LP-EGR is prohibited. In other words, in above step S5, a determination is made about whether or not freezing occurs in the LP-EGR passage 71, and the above determination temperature is the highest temperature of a temperature at which freezing occurs in the LP-EGR passage 71.

Here, when the engine water temperature is high, the highest temperature of the outside air temperature at which freezing occurs becomes low due to a situation where the temperature of the exhaust gas is high. In response to this, in the present embodiment, as described above, the determination temperature is set such that its value becomes lower as the engine water temperature becomes higher.

For example, as illustrated in FIG. 6, when the engine water temperature is lower than a predetermined water temperature TW2, the determination temperature is set to have a lower value as the engine water temperature becomes lower, and the determination temperature is set to a fixed value regardless of the engine water temperature when the engine water temperature is equal to or higher than the above water temperature TW2. Note that the above water temperature TW2 is a temperature lower than the determination water temperature TW1.

The relationship between the engine water temperature and the determination temperature, which is illustrated in FIG. 6, may be set in advance by an experiment or the like, and the above relationship may be stored as a map in the controller 100. The controller 100 extracts, from the map, the determination temperature which corresponds to the engine water temperature detected by the water temperature sensor SN2 and performs the determination in step S5 by using the extracted determination temperature.

Next to step S6, the controller 100 may calculate an HP-EGR upper limit amount (step S7). The HP-EGR upper limit amount is an upper limit amount of an HP-EGR gas amount as the return amount of the HP-EGR gas.

By carrying out step S6, the LP-EGR is prohibited. Accordingly, when step S7 is carried out, the exhaust gas has to be returned only by the HP-EGR apparatus 50.

However, the HP-EGR passage 51 is connected with a portion in the exhaust passage 40 on the upstream side relative to the turbine 62, and the temperature of the exhaust gas which flows into the HP-EGR passage 51 is comparatively high. Thus, when a large amount of the exhaust gas is caused to flow through the HP-EGR passage 51, apparatuses around the HP-EGR passage 51 might be subject to heat damage. The above HP-EGR upper limit amount may be a minimum value of the HP-EGR gas amount at which heat damage is preventable.

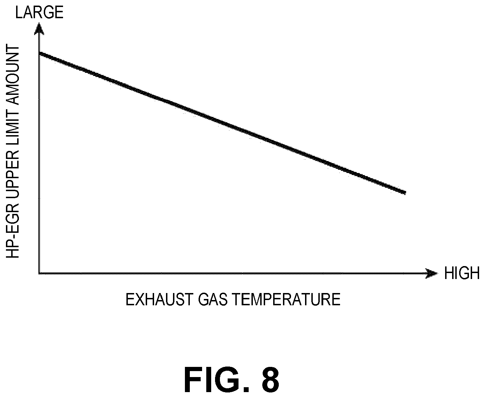

Here, when the temperature of the exhaust gas is high, the above heat damage is likely to occur. In response to this, as illustrated in FIG. 8, the HP-EGR upper limit amount may be set to have a lower value as the temperature of the exhaust gas becomes higher. A relationship between the temperature of the exhaust gas and the HP-EGR upper limit amount, which is illustrated in FIG. 8, may be set in advance by an experiment or the like, and the above relationship may be stored as a map in the controller 100.

For example, in step S9, the controller 100 extracts, from the map, a value that corresponds to an exhaust gas temperature which is detected by the exhaust gas temperature sensor SN5 and sets the value as the HP-EGR upper limit amount. Note that the above HP-EGR upper limit amount corresponds to a "high-pressure EGR gas upper limit amount" of the present invention.

After the HP-EGR upper limit amount is calculated, the controller 100 determines whether or not the target EGR amount calculated in step S1 is larger than the HP-EGR upper limit amount (step S8).

In a case where the determination in step S8 is NO and the target EGR amount is equal to or smaller than the HP-EGR upper limit amount, the controller 100 may control the HP-EGR apparatus 50 such that the target EGR amount is realized. In other words, the controller 100 controls the opening of each of the HP-EGR valve 53 and the throttle valve 33 such that the HP-EGR gas amount becomes the target EGR amount. Further, the controller 100 carries out the normal torque restriction (step S21) and suppresses or limits the engine torque to the normal upper limit torque or smaller. After the normal torque restriction is carried out, the controller 100 finishes the process (returns to step S1).

On the other hand, in a case where the determination in step S8 is YES and the target EGR amount is larger than the HP-EGR upper limit amount, the controller 100 may control the opening of each of the HP-EGR valve 53 and the throttle valve 33 such that the HP-EGR gas amount becomes the HP-EGR upper limit amount (step S12). In other words, the EGR gas amount is restricted.

Further, in a case where the determination in step S8 is YES, the controller 100 may carry out low-temperature torque restriction (step S11). The low-temperature torque restriction is control for making restriction of the engine torque stronger than the normal torque restriction, the upper limit value of the engine torque may be set to low-temperature normal torque which is smaller than the normal upper limit torque, and the engine torque may be controlled so as not to exceed the upper limit value (low-temperature normal torque).

For example, the controller 100 first sets the normal upper limit torque similarly to the normal torque restriction. Next, the controller 100 sets a reduction amount M of the upper limit torque.

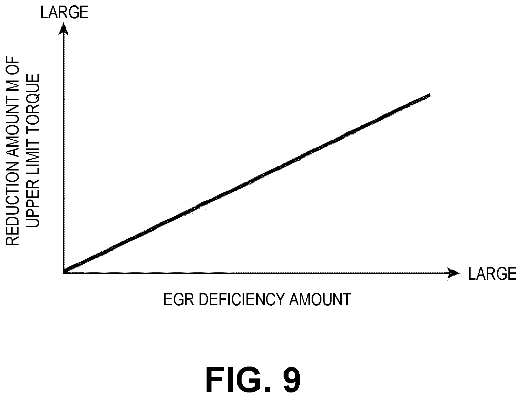

In the present embodiment, as illustrated in FIG. 9, as an EGR deficiency amount becomes larger, the reduction amount M is set to have a higher value. The EGR deficiency amount is a deficiency amount of the HP-EGR upper limit amount with respect to the target EGR amount and is the difference between the target EGR amount and the HP-EGR upper limit amount.

Based on the target EGR amount set in step S1 and the HP-EGR upper limit amount calculated in step S7, the controller 100 may calculate the EGR deficiency amount. The controller 100 thereafter sets a value, which is lower than the value of the normal upper limit torque by the reduction amount M, to low-temperature upper limit torque.

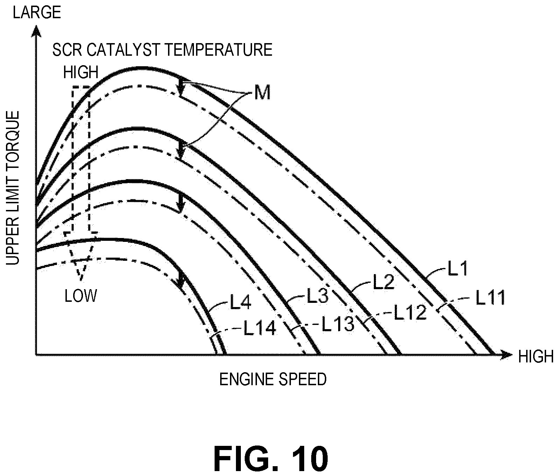

FIG. 10 is a graph for comparing the normal upper limit torque with the low-temperature upper limit torque. In FIG. 10, solid lines indicate the normal upper limit torque, dot-dash lines indicate the low-temperature upper limit torque. Dot-dash lines L11 to L14 in FIG. 19 indicate the normal upper limit torque which respectively correspond to lines L1 to L4 of the normal upper limit torque. As it can be understood from those dot-dash lines L11 to L14, similarly to the normal upper limit torque, the low-temperature upper limit torque changes in accordance with the SCR catalyst temperature and the engine speed and is set to have a lower value as the SCR catalyst temperature becomes lower.

Further, as described above, as the EGR deficiency amount becomes larger, the reduction amount M is set to have a higher value. Accordingly, the low-temperature upper limit torque is set so as to become smaller as the SCR catalyst temperature becomes lower and to become smaller as the EGR deficiency amount becomes larger.

After the low-temperature upper limit torque is set, the controller 100 may compare the requested torque, which is calculated in step S1, with the low-temperature upper limit torque. Then, in a case where the requested torque is equal to or smaller than the low-temperature upper limit torque, the controller 100 may decide or determine the fuel injection amount as the amount of fuel to be injected from the injectors 9 such that the requested torque is realized and controls the injectors 9 in accordance with the decision.

On the other hand, in a case where the requested torque is larger than the low-temperature upper limit torque, the controller 100 may decide or determine the fuel injection amount as the amount of fuel to be injected from the injectors 9 such that the low-temperature upper limit torque, which has a lower value than the maximum value of the engine torque and is lower than the normal upper limit torque, is realized and may control the injectors 9 in accordance with the decision. After the low-temperature torque restriction is carried out, the controller 100 finishes the process (returns to step S1).

Note that in both cases where the normal control is carried out and where the torque restriction is carried out, the controller 100 decides an injection amount of the urea water e.g., based on the SCR catalyst temperature estimated in step S4 and controls the urea injector 45 in accordance with the decision.

As described above, in a case where the SCR catalyst temperature is lower than the determination catalyst temperature (the determination in step S3 is YES), the normal torque restriction or the low-temperature torque restriction is carried out, and the engine torque is restricted. Further, in a case where the SCR catalyst temperature is lower than the determination catalyst temperature, when the engine water temperature is equal to or higher than the determination water temperature (the determination in step S4 is NO) or the outside air temperature is equal to or higher than the determination temperature (the determination in step S5 is NO), the normal torque restriction is carried out. Further, in a case where the SCR catalyst temperature is lower than the determination catalyst temperature (a case where the determination in step S3 is YES), when the engine water temperature is lower than the determination water temperature (the determination in step S4 is YES) and the outside air temperature is lower than the determination temperature (the determination in step S5 is YES) but the target EGR amount is smaller than the HP-EGR upper limit amount, the normal torque restriction is also carried out.

On the other hand, in a case where the SCR catalyst temperature is lower than the determination catalyst temperature (a case where the determination in step S3 is YES), when the engine water temperature is lower than the determination water temperature (the determination in step S4 is YES), the outside air temperature is lower than the determination temperature (the determination in step S5 is YES), and the target EGR amount is equal to or greater than the HP-EGR upper limit amount, the low-temperature torque restriction is carried out, and stronger restriction than the normal torque restriction is applied to the engine torque. Note that control in which the normal torque restriction and the low-temperature torque restriction are integrated and in which the engine torque is restricted corresponds to "restriction control" of the present invention.

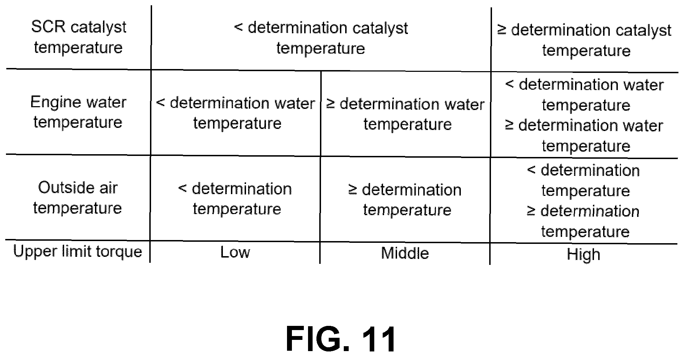

As described in the foregoing, in the engine system 1 according to the present embodiment, in a case where the SCR catalyst temperature is lower than the determination catalyst temperature, the normal torque restriction or the low-temperature torque restriction is carried out, and the injectors 9 are controlled such that the engine torque is equal to or smaller than the normal upper limit torque or the low-temperature upper limit torque having a smaller value than the maximum value of the engine torque. For example, as shown in FIG. 11, the upper limit torque becomes lower as the SCR catalyst temperature becomes lower. Thus, when a purification capability of the SCR catalyst is low because the SCR catalyst temperature is lower than the determination catalyst temperature, a large amount of combustion gas and thus the exhaust gas can be prevented from being generated. In other words, a situation can be avoided where NOx which cannot completely be purified by the SCR catalyst is discharged from the engine body 2. Consequently, a NOx discharge amount can be suppressed to a small amount, and proper exhaust performance can be achieved.

Particularly, when the outside air temperature is lower than the determination temperature, the LP-EGR apparatus 70 is prohibited. Thus, as described above, a situation can be prevented where water in the exhaust gas is frozen in the LP-EGR passage 71 due to a low outside air temperature, and trouble can be avoided such as a situation where the LP-EGR valve 73 cannot appropriately be opened or closed.

Further particularly, in a case where the outside air temperature is lower than the determination temperature, the LP-EGR apparatus 70 is prohibited as described above, but the HP-EGR is permitted. Thus, the exhaust gas, in other words, inactive gas can be introduced into the intake passage 30 and the cylinders 2a while freezing in the LP-EGR passage 71 is prevented, and generation of NOx in the cylinders 2a and the discharge amount of NOx from the engine body 2 can thereby be suppressed to small amounts.

On the other hand, as described above, when a large amount of the exhaust gas is caused to flow through the HP-EGR passage 51, the apparatuses around the HP-EGR passage 51 might be subject to heat damage. However, in the present embodiment, a configuration is made such that in a case where the outside air temperature is lower than the determination temperature, the HP-EGR gas amount is suppressed to the HP-EGR upper limit amount or smaller, and the HP-EGR gas at a high temperature does not excessively flow through the HP-EGR passage 51. Thus, the above heat damage can be prevented while generation and discharge of NOx is suppressed by the HP-EGR. In particular, the HP-EGR upper limit amount is set to have a lower value as the temperature of the exhaust gas becomes higher, and prevention of heat damage and suppression of generation and discharge of NOx can thereby effectively be realized.

Further particularly, in a case where the torque restriction is performed because the SCR catalyst temperature is lower than the determination catalyst temperature, when a condition is established that the outside air temperature is lower than the determination temperature and the target EGR amount is equal to or greater than the HP-EGR upper limit amount, that is, when the LP-EGR cannot be performed for preventing freezing in a state where the purification capability of the SCR catalyst is low and sufficient exhaust gas cannot be returned by the HP-EGR apparatus 50 for preventing heat damage, the upper limit value of the engine torque is set to a lower value (low-temperature upper limit torque) than a value in a case where the above condition is not established (normal upper limit torque). Thus, a deficiency of return of the exhaust gas can be compensated by reduction in a combustion gas amount, and increases in generation and discharge amounts of NOx can be suppressed. As noted above, in the present embodiment, proper exhaust performance can be achieved while prevention of freezing in the LP-EGR passage 71 and thus appropriate work of the LP-EGR apparatus 70, and prevention of heat damage to peripheral components of the HP-EGR apparatus 50 and thus appropriate work of the HP-EGR apparatus 50 are secured.

Further particularly, in the present embodiment, the low-temperature upper limit torque is set so as to become smaller as the SCR catalyst temperature becomes lower and to become smaller as the EGR deficiency amount becomes larger. Thus, the low-temperature upper limit torque can be set to an appropriate value which corresponds to a NOx purification capability of the SCR catalyst and the deficiency amount of the EGR gas. Consequently, proper exhaust performance can be achieved without excessively decreasing the engine torque.

Further particularly, as shown in FIG. 11, the upper limit torque becomes lower as the engine water temperature and/or the outside air temperature becomes lower.

### (Modifications)

In the above embodiment, a description is made about a case where the engine torque is changed by changing the amount of fuel to be injected from the injectors 9, but an apparatus for changing the engine torque is not limited to the injector 9. For example, the intake air flow amount is changed by changing the opening of the throttle valve 33, and the engine torque may thereby be changed. However, the engine according to the present embodiment is a diesel engine, and the engine torque is changed mainly in accordance with the fuel injection amount.

In the above embodiment, a description is made about a case where the upper limit value is set for the engine torque and the injectors 9 are controlled such that the engine torque has a value equal to or lower than the upper limit value, but an upper limit value is set for an engine output instead of the engine torque, and the injectors 9 and so forth may thereby be controlled such that the engine output has a value equal to or lower than the upper limit value.

In the above embodiment, the determination in step S4, in other words, the determination about whether or not the engine water temperature is lower than the determination water temperature may be omitted. Further, steps S7, S8, S9, and S10 may be omitted. In other words, in a case where the determination in step S5 is YES and the outside air temperature is lower than the determination temperature, the low-temperature torque restriction may be carried out regardless of the target EGR amount. Further, the HP-EGR apparatus 50 itself may be omitted.

Further, in the above embodiment, step S6, that is, the control for prohibiting the LP-EGR may be omitted. In other words, a configuration may be made such that the LP-EGR is permitted even when the outside air temperature is lower than the determination temperature. Note that in this case, although freezing might occur in the LP-EGR passage 71, proper exhaust performance can be achieved by carrying out torque restriction similar to that in the above embodiment. For example, in a case where the LP-EGR is permitted, when the outside air temperature is lower than the determination temperature, freezing might occur in the LP-EGR passage 71, due to this, the exhaust gas cannot sufficiently be returned through the LP-EGR passage 71, and generation and discharge of NOx might thereby increase. However, when the above torque restriction is carried out and restriction of the engine torque is thereby made stronger in a case where the outside air temperature is lower than the determination temperature, generation and discharge of NOx can certainly be decreased, and proper exhaust performance can be achieved.

Further, in the above embodiment, a description is made about a case where the SCR catalyst temperature is acquired by estimating that, but the SCR catalyst temperature may be acquired by detection by a sensor. Similarly, the outside air temperature may be acquired by estimation instead of detection by the outside air temperature sensor SN7.

Further, a specific apparatus for purifying the exhaust gas is not limited to the above. Further, the engine is not limited to a diesel engine and may be a gasoline engine. Further, a specific structure of the apparatus, which is provided in the exhaust passage 40 and purifies the exhaust gas, is not limited to the above.

### [Reference Signs List]

2 engine body
9 fuel injector (adjustment apparatus)
30 intake passage
40 exhaust passage
42 SCRF (exhaust gas purification apparatus)
43 SCR catalyst apparatus (exhaust gas purification apparatus)
51 HP-EGR passage (high-pressure EGR passage)
53 HP-EGR valve (high-pressure EGR valve)
71 LP-EGR passage (EGR passage)
73 LP-EGR valve (EGR valve)
100 controller (control apparatus, purification apparatus temperature acquisition unit)
SN5 exhaust gas temperature sensor (exhaust gas temperature detection apparatus)
SN7 outside air temperature sensor (outside air temperature acquisition apparatus)

## Claims

1. An engine system (1) comprising:
an engine body (2);
an intake passage (30) through which intake air introduced into the engine body (2) flows;
an exhaust passage (40) through which exhaust gas guided out from the engine body (2) flows;
an adjustment apparatus (9) which is configured to adjust an engine output or engine torque;
an exhaust gas purification apparatus (42, 43) which is disposed in the exhaust passage (40) and configured to purify exhaust gas;
an EGR passage (71) which is configured to connect the exhaust passage (40) on a downstream side relative to the exhaust gas purification apparatus (42, 43) with the intake passage (30) and returns EGR gas as a part of exhaust gas to the intake passage (30);
an EGR valve (73) which is configured to open and/or close the EGR passage (71);
an outside air temperature acquisition apparatus (SN7) which is configured to acquire an outside air temperature;
a purification apparatus temperature acquisition apparatus which is configured to acquire a purification apparatus temperature as a temperature of the exhaust gas purification apparatus (42, 43); and
a control apparatus (100) which is configured to control the adjustment apparatus (9) and the EGR valve (73), wherein
the control apparatus (100) is configured to
carry out restriction control for controlling the adjustment apparatus (9) such that an upper limit value of the engine output or the engine torque is lower than a maximum value and the engine output or the engine torque is equal to or lower than the upper limit value in a case where the purification apparatus temperature acquired by the purification apparatus temperature acquisition apparatus is lower than a predetermined reference temperature, and
set the upper limit value to a lower value as the outside air temperature acquired by the outside air temperature acquisition apparatus (SN7) becomes lower.

2. The engine system (1) according to claim 1, wherein
the control apparatus (100) is configured to prohibit opening of the EGR valve (73) when the outside air temperature is lower than a predetermined determination temperature.

3. The engine system (1) according to claim 1 or 2, further comprising:
a high-pressure EGR passage (51) which is configured to connect the exhaust passage (40) on an upstream side relative to the exhaust gas purification apparatus (42, 43) with the intake passage (30); and
a high-pressure EGR valve (53) which is configured to open and/or close the high-pressure EGR passage (51), wherein
when the restriction control is carried out, the control apparatus (100) is configured to
set the upper limit value to a first value, which is lower than a second value, when the outside air temperature is lower than a predetermined determination temperature,
set the upper limit value to the second value when the outside air temperature is equal to or higher than the determination temperature,
permit opening of the EGR valve (73) and the high-pressure EGR valve (53) when the outside air temperature is equal to or higher than the determination temperature, and
permit opening of the high-pressure EGR valve (53) but prohibit opening of the EGR valve (53) when the outside air temperature is lower than the determination temperature.

4. The engine system (1) according to claim 3, wherein
the control apparatus (100) is configured to
set a target EGR amount as a target value of an exhaust gas amount to be returned to the intake passage (30),
set a high-pressure EGR gas upper limit amount as an upper limit value of a high-pressure EGR gas amount to be returned to the intake passage (30) via the high-pressure EGR passage (51),
control the high-pressure EGR valve (53) such that the high-pressure EGR gas amount is equal to or lower than the high-pressure EGR gas upper limit amount, and
in carrying out the restriction control, set the upper limit value to the second value when the outside air temperature is lower than the determination temperature and the target EGR amount is equal to or smaller than the high-pressure EGR gas upper limit amount, and set the upper limit value to a lower value than the second value when the outside air temperature is lower than the determination temperature and the target EGR amount is greater than the high-pressure EGR gas upper limit amount.

5. The engine system (1) according to claim 4, further comprising
an exhaust gas temperature detection apparatus (SN5) which is configured to detect a temperature of exhaust gas, wherein
the control apparatus (100) is configured to set the high-pressure EGR gas upper limit amount to a lower value as the temperature of the exhaust gas, which is detected by the exhaust gas temperature detection apparatus (SN5), becomes higher.

6. The engine system (1) according to claim 4 or 5, wherein
the control apparatus (100) is configured to set the upper limit value such that the upper limit value becomes lower as the purification apparatus temperature becomes lower when the outside air temperature is lower than the determination temperature and the target EGR amount is greater than the high-pressure EGR gas upper limit amount.

7. The engine system (1) according to any one of claims 4 to 6, wherein
the control apparatus (100) is configured to set the upper limit value such that the upper limit value becomes lower as a deficiency amount of the high-pressure EGR gas upper limit amount with respect to the target EGR amount becomes greater.

8. The engine system (1) according to any one of the preceding claims, wherein
the adjustment apparatus (9) is a fuel injector.

9. The engine system (1) according to any one of the preceding claims, wherein
the control apparatus (100) is configured to acquire the purification apparatus temperature, as the purification apparatus temperature acquisition apparatus.

10. A method of controlling an engine system (1), the engine system (1) comprising:
an engine body (2);
an intake passage (30) through which intake air introduced into the engine body (2) flows;
an exhaust passage (40) through which exhaust gas guided out from the engine body (2) flows;
an adjustment apparatus (9) which is configured to adjust an engine output or engine torque;
an exhaust gas purification apparatus (42, 43) which is disposed in the exhaust passage (40) and configured to purify exhaust gas;
an EGR passage (71) which is configured to connect the exhaust passage (40) on a downstream side relative to the exhaust gas purification apparatus (42, 43) with the intake passage (30) and returns EGR gas as a part of exhaust gas to the intake passage (30); and
an EGR valve (73) which is configured to open and/or close the EGR passage (71), the method comprising:
acquiring an outside air temperature;
acquiring a purification apparatus temperature as a temperature of the exhaust gas purification apparatus (42, 43) ;
carrying out restriction control which controls the adjustment apparatus (9) such that an upper limit value of the engine output or the engine torque is lower than a maximum value and the engine output or the engine torque is equal to or lower than the upper limit value in a case where the purification apparatus temperature is lower than a predetermined reference temperature; and
setting the upper limit value to a lower value as the outside air temperature becomes lower.

11. The method according to claim 10, further comprising
prohibiting opening of the EGR valve (73) when the outside air temperature is lower than a predetermined determination temperature.

12. The method according to claim 10 or 11, wherein the engine system (1) further comprising:
a high-pressure EGR passage (51) which is configured to connect the exhaust passage (40) on an upstream side relative to the exhaust gas purification apparatus (42, 43) with the intake passage (30); and
a high-pressure EGR valve (53) which is configured to open and/or close the high-pressure EGR passage (51), wherein
when the restriction control is carried out,
the upper limit value is a first value, which is lower than a second value, when the outside air temperature is lower than a predetermined determination temperature,
the upper limit value is the second value when the outside air temperature is equal to or higher than the determination temperature,
opening of the EGR valve (73) and the high-pressure EGR valve (53) is permitted when the outside air temperature is equal to or higher than the determination temperature, and
opening of the high-pressure EGR valve (53) is permitted but opening of the EGR valve (53) is prohibited when the outside air temperature is lower than the determination temperature.

13. The engine system (1) according to claim 12, further comprising:
setting a target EGR amount as a target value of an exhaust gas amount to be returned to the intake passage (30) ;
setting a high-pressure EGR gas upper limit amount as an upper limit value of a high-pressure EGR gas amount to be returned to the intake passage (30) via the high-pressure EGR passage (51); and
controlling the high-pressure EGR valve (53) such that the high-pressure EGR gas amount is equal to or lower than the high-pressure EGR gas upper limit amount, wherein
in carrying out the restriction control, the upper limit value is the second value when the outside air temperature is lower than the determination temperature and the target EGR amount is equal to or smaller than the high-pressure EGR gas upper limit amount, and the upper limit value is a lower value than the second value when the outside air temperature is lower than the determination temperature and the target EGR amount is greater than the high-pressure EGR gas upper limit amount.

14. The method according to claim 13, further comprising detecting a temperature of exhaust gas, wherein
the high-pressure EGR gas upper limit amount becomes lower as the temperature of the exhaust gas becomes higher.

15. The method (1) according to claim 13 or 14, wherein
the upper limit value becomes lower as the purification apparatus temperature becomes lower when the outside air temperature is lower than the determination temperature and the target EGR amount is greater than the high-pressure EGR gas upper limit amount, and/or
the upper limit value becomes lower as a deficiency amount of the high-pressure EGR gas upper limit amount with respect to the target EGR amount becomes greater.
